Europäisches Patentamt

European Patent Office

Office européen des brevets

(19)

(11) Veröffentlichungsnummer : **0 355 028 B1**

# (12) EUROPÄISCHE PATENTSCHRIFT

(45) Veröffentlichungstag der Patentschrift :
06.05.92 Patentblatt 92/19

(51) Int. Cl.$^5$ : **C04B 41/48**

(21) Anmeldenummer : **89115083.1**

(22) Anmeldetag : **16.08.89**

(54) **Verfahren zur Verhinderung von Ausblüherscheinungen auf mineralischen Substraten.**

Die Akte enthält technische Angaben, die nach dem Eingang der Anmeldung eingereicht wurden und die nicht in dieserPatentschrift enthalten sind.

(30) Priorität : **18.08.88 DE 3827975**

(43) Veröffentlichungstag der Anmeldung :
**21.02.90 Patentblatt 90/08**

(45) Bekanntmachung des Hinweises auf die Patenterteilung :
**06.05.92 Patentblatt 92/19**

(84) Benannte Vertragsstaaten :
**BE CH DE ES FR GB IT LI NL SE**

(56) Entgegenhaltungen :
**EP-A- 0 123 234**
**CH-A- 636 328**

(56) Entgegenhaltungen :
**FR-A- 1 222 066**
**FR-A- 2 146 766**
**US-A- 4 511 699**
**CHEMICAL ABSTRACTS, Band 109, 1988, Seite 95, Zusammenfassung Nr. 232857g, Columbus, Ohio, US; & CS-A-249 396 (M.STE-PITA) 15-01-1988**

(73) Patentinhaber : **BASF Aktiengesellschaft**
**Carl-Bosch-Strasse 38**
**W-6700 Ludwigshafen (DE)**

(72) Erfinder : **Rehmer, Gerd, Dr.**
**Koenigsberger Strasse 1**
**W-6712 Bobenheim-Roxheim (DE)**
Erfinder : **Schwartz, Manfred, Dr.**
**Friesenstrasse 24**
**W-6700 Ludwigshafen (DE)**
Erfinder : **Dotzauer, Bernhard, Dr.**
**Woehlerstrasse 12 f**
**W-6701 Maxdorf (DE)**

## Beschreibung

Die Erfindung betrifft ein Verfahren zur Verhinderung von Ausblüherscheinungen auf mineralischen Substraten, bei dem die mineralischen Substrate mit wäßrigen Polyacrylat-Dispersionen beschichtet werden.

Mineralische Substrate, wie besonders Betondachsteine, aber auch herkömmliche Ziegel, neigen unter dem Einfluß der Witterung zu Ausblüherscheinungen, die meist in Form weißer, pustelartiger Gebilde auftreten und nach und nach zu einer Schädigung der mineralischen Substrate führen. Man hat daher in der Praxis schon seit langem versucht, derartige Ausblüherscheinungen durch das Aufbringen wasserfester Überzüge zurückzudrängen. Von besonderem Interesse sind dabei Beschichtungen, die aus Polymerdispersionen, insbesondere aus Polyacrylat-Dispersionen, erhalten werden (vgl. dazu die US-PS 4,511,699 sowie die GB-PS 1 411 268). Trotz der verhältnismäßig guten Beständigkeit von Polyacrylaten gegen die Einflüsse des Wetters, lassen jedoch die mit den bisherigen Polyacrylat-Beschichtungen erzielten Ergebnisse noch zu wünschen übrig.

Aufgabe der vorliegenden Erfindung ist es, durch verbesserte Polyacrylat-Beschichtungen Ausblüherscheinungen auf mineralischen Substraten, insbesondere auf Betondachziegeln für einen verlängerten Zeitraum zu gewährleisten.

Es wurde gefunden, daß man Ausblüherscheinungen auf mineralischen Substraten durch Beschichten ihrer Oberfläche mit wäßrigen Polyacrylatdispersionen und Trocknen der Beschichtung gegebenenfalls bei erhöhter Temperatur besonders wirkungsvoll verhindern kann, wenn man für die Beschichtung ein Gemisch aus

A) einer 20 bis 65 gew.-%igen, eine Mindestfilmbildetemperatur von -30 bis +30°C aufweisenden wäßrigen Dispersion eines Copolymerisats aus

    a) 20 bis 70 % seinses Gewichtes an (Meth)acrylestern von 3 bis 20 C-Atome enthaltenden, eine tertiäre CH-Gruppe aufweisenden Alkanolen,

    b) 30 bis 60 % seines Gewichtes an Styrol, α-Methylstyrol, Methacrylsäuremethylester, (Meth)acrylsäure-tert. butylester und/oder (Meth)acrylnitril und

    c) 0,2 bis 7 % seines Gewichtes an 3 bis 5 C-Atome aufweisenden Mono- und/oder Dicarbonsäuren und/oder deren gegebenenfalls am N-Atom durch eine 1 bis 4 C-Atome enthaltende Alkylgruppe substituierten Amiden und

B) 0,1 bis 5 Gew.-%, bezogen auf die Menge des in der Komponente (A) enthaltenen Copolymerisats, eines aromatischen Ketons

verwendet und die Beschichtung bei und/oder nach ihrer Trocknung mit ultraviolettem Licht bestrahlt.

Wäßrige, 20 bis 65 gew.-%ige Dispersionen einer Mindestfilmbildetemperatur von -30 bis +30°C von Copolymerisaten aus den Monomeren (a), (b) und (c) und deren Herstellung sind an sich bekannt. Als Monomere (a) enthalten sie bevorzugt 2-Ethylhexylacrylat und/oder 2-Ethylhexylmethacrylat und/oder Isooctylacrylat und-/oder -methacrylat einpolymerisiert. Als Monomere (a) sind auch Isopropylacrylat und -methacrylat, Isobutylacrylat und -methacrylat, Isodecylacrylat und -methacrylat, Isododecylacrylat und -methacrylat sowie ferner Isostearylacrylat und -methacrylat geeignet, wobei Acryl- und Methacrylsäureester von 6 bis 12 C-Atome enthaltenden, eine tertiäre CH-Gruppe aufweisenden Alkanolen der genannten Art allgemein bevorzugt werden, und ihre Menge vorzugsweise 30 bis 60 % des Gewichtes des Copolymerisates beträgt.

Von den Comonomeren (b) werden Styrol und Methacrylsäuremethylester sowie auch α-Methylstyrol in Mengen von 30 bis 50 % des Gewichtes des Copolymerisats vorgezogen. Als Monomere (b) kommen zudem noch Acrylsäure- und Methacrylsäure-tert. butylester, Acrylnitril und Methacrylnitril in Betracht.

Die Monomeren (c) sind in das Copolymerisat der Dispersion (A), vorzugsweise in Mengen von 1 bis 4 % seines Gewichtes einpolymerisiert. Von besonderem Interesse sind dabei Acrylsäure, Methacrylsäure und Itaconsäure sowie ferner Crotonsäure, Maleinsäure, Fumarsäure, Acrylamid, Methacrylamid, N-Methylacrylamid und -methacrylamid, N-Butyl-acrylamid und -methacrylamid, N-Ethyl-acrylamid, Maleinsäuremonoamid und -diamid, Fumarsäureamide und Itaconsäureamide.

Zusätzlich können die Copolymerisate der Dispersionen (A), welche vorzugsweise Mindestfilmbildetemperaturen von -20 bis +10°C haben, noch 0 bis 6 % ihres Gewichtes an anderen Monomeren (d) einpolymerisiert enthalten. Als Monomere (d) sind Tetrahydrofurfuryl-acrylate und -methacrylate von besonderem Interesse. Geeignet sind als Monomere (d) zudem Alkoxyalkyl acrylate wie 3-Methoxy-n-butyl-acrylat und -methacrylat, 2- und 3-n-Butoxymethyl-n-butylacrylat und -methacrylat, 2-Ethoxy-n-propyl-acrylat und -methacrylat, 3-Ethoxyhexylacrylat, 4-n-Propoxy-n-hexyl-methacrylat, 5-Methoxy-n-hexylacrylat und -methacrylat und 2-Methyl-4-methoxyhexyl-acrylat und -methacrylat. Von derartigen Monomeren (d) enthält das Copolymerisat der Dispersion (A) vorzugsweise 1 bis 4 % seines Gewichtes einpolymerisiert, wobei Tetrahydrofurfuryl-2-acrylat und -methacrylat sowie 2- und 3-Methoxy-n-butylacrylat und -methacrylat vorgezogen werden.

In den Copolymerisaten der Dispersionen (A) können bis zu 25 Gew.-% der Monomeren (a) durch Ethylacrylat, Ethylmethacrylat, n-Butylacrylat und -methacrylat und/oder n-Hexylacrylat und/oder -methacrylat und-

2

EP 0 355 028 B1

/oder Vinylester von vorzugsweise 1 bis 12 C-Atome enthaltenden Carbonsäuren, wie besonders Vinylformiat, Vinylacetat, Vinylpropionat, Vinyl-n-butyrat, und/oder Vinyllaurat ersetzt sein.

Die Polyacrylat-Dispersionen (A) können in an sich üblicher Weise unter Verwendung der üblichen radikalbildenden Polymerisationsinitiatoren sowie von üblichen anionischen und gegebenenfalls zusätzlichen nichtionischen Dispergierhilfsmitteln hergestellt sein. Im allgemeinen werden für ihre Herstellung Persulfate, wie Ammoniumpersulfat und Kaliumpersulfat, eingesetzt und als anionische Emulgatoren werden häufig in Mengen von vorzugsweise 0,5 bis 2,5 Gew.-%, bezogen auf die Monomeren, sulfatierte Alkoxylierungsprodukte von meist 12 bis 20 C-Atome enthaltenden, gegebenenfalls monoolefinisch ungesättigten Alkanolen, wie Laurylalkohol, Stearylalkohol, Oleylalkohol oder Spermölalkohol oder 12 bis 20 C-Atome enthaltenden gegebenenfalls monoolefinisch ungesättigten Alkylaminen oder meist 8 bis 12 C-Atome in den Alkylgruppen enthaltenden Alkylphenolen, wie n-Octylphenol, n-Nonylphenol, iso-Nonylphenol oder n-Dodecylphenol eingesetzt, wobei für deren Alkoxylierung im allgemeinen Ethylenoxid und/oder Propylenoxid verwendet sein kann und der Alkoxylierungsgrad im allgemeinen 5 bis 80, vorzugsweise 10 bis 30 Mol Alkylenoxid, vorzugsweise Ethylenoxid, je Mol Fettalkohol, Fettamin oder Alkylphenol beträgt. Derartige Alkoxylierungsprodukte werden meist in Form ihrer wasserlöslichen Alkali- oder Ammoniumsalze eingesetzt. Zusätzlich können auch entsprechende nichtsulfatierte alkoxylierte Fettalkohole, Fettamine oder Alkylphenole eingesetzt sein. Die Emulsionspolymerisation zur Herstellung der Polyacrylat-Dispersionen (A) kann unter den üblichen Temperaturbedingungen von meist 40 bis 90°C, vorzugsweise nach den Monomeren- oder Emulsions-Zulaufverfahren durchgeführt sein. Die K-Werte der neuen Copolymerisate (bestimmt nach DIN 53 726) in 0,5%iger Lösung in Tetrahydrofuran bei 25°C sollen im allgemeinen bei 50 bis 150, vorzugsweise bei 75 bis 85, liegen.

Die aromatischen Ketone werden in den Gemischen im allgemeinen in Mengen von 0,1 bis 5 Gew.-%, bezogen auf die Menge des in der Komponente (A) enthaltenen Copolymerisates, vorzugsweise in Mengen von 0,2 bis 2,5 Gew.-%, eingesetzt. Besonders bevorzugt sind Benzophenon und Benzophenonderivate wie 3,3'-Dimethyl-4-methoxybenzophenon, 3- und 4-Hydroxybenzophenon, Benzophenon-2-carbonsäure, Benzophenon-3-carbonsäure, Benzophenon-4-carbonsäure, 3,3'-4,4'-Benzophenontetracarbonsäure und 3,3',4,4'-Benzophenontetracarbonsäuredianhydrid, 3,3',4,4'-Tetra(tert.-butylperoxicarbonyl)benzophenon sowie 2-, 3- und 4-Phenylbenzophenon, 2-, 3- und 4-Alkylbenzophenone mit 1 bis 10 C-Atomen in den Alkylresten, wie 2-, 3- und 4-Methylbenzophenon, 2-, 3-, 4-Nonylbenzophenon, Dialkylbenzophenone wie 4,4'-Diisopropylbenzophenon sowie auch olefinisch ungesättigte sowie wasserlösliche Benzophenonderivate. Geeignete aromatische Ketone bzw. Benzophenonderivate sind ferner 2-Acetonaphthon, 4-Aminobenzophenon und 4,4'-Tetramethylaminobenzophenon. Derartige aromatische Ketone werden den Polyacrylat-Dispersionen (A) im allgemeinen in Form einer feinteiligen Suspension oder in manchen Fällen auch in reiner Form, gegebenenfalls bei erhöhter Temperatur, meist unter Einrühren zugesetzt.

Zusätzlich könen den Dispersionen auch Pigmente und Pigmentzubereitungen, wie Titanoxide, Eisenoxide und Farbpigmentzubereitungen in an sich üblichen Mengen, zugefügt werden.

Bei dem neuen Verfahren können die Gemische aus den Polyacrylat-Dispersionen und den aromatischen Ketonen, die gegebenenfalls Füllstoffe enthalten, auf die mineralischen Substrate in an sich üblicher Weise aufgebracht werden. Als mineralische Substrate kommen z.B. geformte Gebilde aus Asbestzement, Beton und Gasbeton, z.B. Platten, Rohre und insbesondere Dachziegel, in Frage, wobei die Aufträge auch auf nicht ausgehärtete Produkte dieser Art, insbesondere Betondachziegel aufgebracht werden können. Der Auftrag erfolgt in an sich üblicher Weise durch Spritzen, Spachteln, Rakeln, Rollen oder Gießen, wobei meist Auftragsmengen von 100 bis 250 g/m², angewandt werden. Von besonderem Interesse ist das Aufbringen derartiger Beschichtungen auf nicht abgebundene Betondachsteine. Das Trocknen der Aufträge kann in an sich üblicher Weise, gegebenenfalls bei Raumtemperatur und wenig erhöhter Temperatur im allgemeinen bei Temperaturen von 20 bis 100°C, vorzugsweise von 50 bis 80°C, durchgeführt werden, wobei z.B. Heizstrahler oder Wärmeluftwälzvorrichtungen eingesetzt werden können. Dabei können die beschichteten mineralischen Substrate mit Vorteil gleichzeitig mit ultraviolettem Licht bestrahlt werden, wobei eine Inertgasatmosphäre nicht erforderlich ist. Verwendet werden können hierfür übliche UV-Strahler, z.B. Quecksilberdampf-Niederdruck, -mitteldruck- oder -hochdrucklampen deren Leistungen z.B. 80 W/cm bis 160 W/cm oder mehr betragen können. Auch mehrere derartige UV-Strahlungsquellen können mit Vorteil eingesetzt werden.

Man erhält dabei auf den mineralischen Substraten gut haftende Überzüge, die eine vorzügliche Alterungsbeständigkeit und besonders lange Lebensdauer aufweisen. Beim Einsatz der nach dem neuen Verfahren beschichteten mineralischen Substrate, insbesondere von beschichteten Beton-Dachsteinen, wird die Oberfläche der Beschichtung im Laufe der Zeit durch die Bewitterung angegriffen, doch werden dann die angegriffenen Stellen, an denen nunmehr vorher nicht zugängliche weitere aromatische Ketone freigelegt werden, durch den UV-Anteil der Sonnenbestrahlung erneut vernetzt, wodurch die darunter liegenden Auftragsschichten wirksam geschützt werden. Durch diese "Selbstreparatur" weisen die erfindungsgemäß behandelten mineralischen Substrate, d.h. die Beschichtungen, eine wesentlich höhere Lebensdauer auf, als die mit

3

herkömmlichen Mitteln hergestellten Beschichtungen.

Die in den folgenden Beispielen angegebenen Teile und Prozente beziehen sich auf das Gewicht. Die darin angegebenen K-Werte wurden in 0,5%iger Lösung in Tetrahydrofuran bei 25°C nach DIN 53 726, die Mindestfilmbildetemperaturen nach DIN 53 787 bestimmt.

Beispiel 1

In an sich üblicher Weise wird nach dem Emulsionszulaufverfahren eine 50%ige wäßrige Dispersion eines Mischpolymerisates aus 49 Teilen 2-Ethylhexylacrylat, 49 Teilen Methylmethacrylat und 2 Teilen Acrylsäure hergestellt, wobei 0,4 %, bezogen auf die Monomeren, Natriumperoxodisulfat als Polymerisationsinitiator und 1,5 %, bezogen auf die Monomeren, an handelsüblichem Emulgator eingesetzt werden. Die Polymerisation wird bei 80°C durchgeführt. Das erhaltene Polyacrylat hat den K-Wert 80 und die Dispersion einer Mindestfilmbildetemperatur(MFT) von 8°C.

In die Polyacrylat-Dispersionen werden bei 60°C 0,5 %, bezogen auf das Polyacrylat, Benzophenon eingerührt. Das Gemisch wird auf 40 % Polyacrylat-Gehalt mit Wasser verdünnt und 0,5 % eines handelsüblichen Entschäumers zugesetzt.

Mit dem erhaltenen Beschichtungsmittel werden "grüne" Betondachsteine mit einer Spritzpistole (etwa 2 bar Spritzdruck) gleichmäßig besprüht, derart, daß der Auftrag 120 g/m$^2$ beträgt. Die "grünen" Betondachsteine werden als Flachsteine der Abmessungen 30 · 20 · 1,8 cm durch Extrusion eines Mörtels aus Sand (Korngröße bis zu 0,3 mm) und Zement (Verhältnis 1:3) und einem Wasser/Zement-Faktor von 0,4 hergestellt, der mit 3 % Eisenoxidpigment schwarz eingefärbt ist. Zur Härtung werden die beschichteten Betondachsteine im Klimaschrank 30 Minuten bei 50 % relativer Luftfeuchtigkeit getrocknet, daraufhin 10 Minuten mit einer 10 W-UV-Lampe bestrahlt und sodann 2,5 Stunden bei etwa 50 % und dann 3 Stunden bei etwa 95 % relativer Luftfeuchtigkeit getrocknet. Man lagert dann 24 Stunden bei Raumtemperatur und setzt die Beschichtung 24 Stunden lang Wasserdampf von 60°C aus. Nach 7-tägiger Trocknung bei Raumtemperatur wird die Beschichtung visuell beurteilt. Die Ergebnisse sind in der Tabelle im Anschluß an die Beispiele zusammengestellt.

Beispiel 2

Nach dem Emulsionszulaufverfahren wird in an sich üblicher Weise eine 50 %ige wäßrige Dispersion eines Copolymerisates aus 46 Teilen 2-Ethylhexylacrylat, 48 Teilen Methylmethacrylat, 4 Teilen Tetrahydrofurfuryl-2-acrylat und 2 Teilen Acrylsäure hergestellt. Dabei wird als Polymerisationsinitiator Natriumperoxodisulfat (0,4 %, bezogen auf die Monomeren) und 1,5 % (bezogen auf die Monomeren) handelsüblicher Emulgator eingesetzt und bei 85°C polymerisiert. Das erhaltene Copolymerisat hat den K-Wert 78; die Dispersion eine MFT von 9°C.

In die auf 60°C erwärmte Polyacrylat-Dispersionen gibt man 0,4 %, bezogen auf das Polyacrylat, Benzophenon, verdünnt auf 40 % Polyacrylatgehalt und fügt 0,5 % handelsüblichen Entschäumer zu.

Man beschichtet dann wie in Beispiel 1 angegeben grüne Betondachsteine. Das Ergebnis ist in der Tabelle am Ende der Beispiele angegeben.

Beispiel 3

Man stellt eine 50 %ige wäßrige Dispersion eines Emulsionscopolymerisats aus 53 Teilen 2-Ethylhexylacrylat, 40 Teilen Styrol, 3 Teilen Acrylsäure, 2 Teilen Acrylamid und 2 Teilen Tetrahydrofurfuryl-2-methacrylat her, wobei man 0,4 %, bezogen auf die Monomeren, Natriumperoxodisulfat als Initiator und 2,0 Teile Emulgator, bezogen auf die Monomeren, einsetzt und bei 85°C polymerisiert. Die erhaltene Dispersion hat eine MFT von ca. 0°C und das Polyacrylat den K-Wert von 90.

Man verdünnt die Polyacrylat-Dispersion mit Wasser auf 40 %, fügt 0,5 Teile 2-Hydroxy-3-(4-benzoylphenyoxy)-N,N,N-trimethyl-1-propanammoniumchloridmonohydrat und 0,5 Teile eines handelsüblichen Entschäumers zu und beschichtet grüne Betondachsteine wie in Beispiel 1 angegeben. Die erhaltenen Ergebnisse sind in der Tabelle am Ende der Beispiele zusammengestellt.

Beispiel 4

Wie in Beispiel 3 angegeben stellt man eine 50 %ige wäßrige Dispersion eines Emulsionscopolymerisates aus 40 Teilen Styrol, 50 Teilen 2-Ethylhexylacrylat, 2 Teilen Acrylamid, 2 Teilen Acrylsäure, 3 Teilen Tetrahydrofurfuryl-2-acrylat und 3 Teilen eines handelsüblichen copolymerisierbaren Benzophenonderivats her. Die MFT der erhaltenen Dispersion beträgt ca. 0°C der K-Wert des Polyacrylats 87.

Zu der mit Wasser auf 40°C verdünnten Polyacrylat-Dispersion gibt man 0,5 Teile eines handelsüblichen Entschäumers. Man beschichtet dann grüne Betondachsteine wie in Beispiel 1 angegeben. Die erhaltenen Ergebnisse sind in der Tabelle am Ende der Beispiele zusammengestellt.

Beispiel 5

Man arbeitet wie in Beispiel 4 angegeben, setzt jedoch anstelle des copolymerisierbaren Benzophenonderivates 1 %, bezogen auf das Polyacrylat, Benzophenon zu. Die erhaltenen Ergebnisse der Beschichtung von Betondachsteinen sind in der Tabelle am Ende der Beispiele zusammengestellt.

Beispiel 6

Man arbeitet wie in Beispiel 2 angegeben, setzt aber anstelle von 1 % Benzophenon (a) 1,5 % Benzophenon bzw. (b) 1,5 % 4-Hydroxybenzophenon bzw. (c) 2 % Thioxanthon zu. Man arbeitet im übrigen wie in Beispiel 2 angegeben. Die erhaltenen Ergebnisse sind in der folgenden Tabelle zusammengestellt.

Tabelle

| Beispiel | Aussehen der getrockneten Beschichtungen | |
|---|---|---|
| | vor | nach |
| | der 24stündigen Wasserdampfbehandlung | |
| 1 | gleichmäßig, glänzend | geringer Glanzverlust kein Tack, praktisch keine Ausblühungen |
| 2 | gleichmäßig, glänzend | geringer Glanzverlust, kein Tack, keine Aus-blühungen |
| 3 | gleichmäßig, glänzend und gute Farbwieder-gabe | praktisch keine Aus-blühungen, schwacher Tack |
| 4 | gleichmäßig, glänzend und gute Farbwieder-gabe | keine Veränderung, keine Ausblühungen |
| 5 | gleichmäßig, glänzend und gute Farbwieder-gabe | keine Veränderung, keine Ausblühungen |
| 6 | gleichmäßig, glänzend und gute Farbwieder-gabe | keine Veränderung, keine Ausblühungen |

EP 0 355 028 B1

**Patentansprüche**

1. Verfahren zur Verhinderung von Ausblüherscheinungen auf mineralischen Substraten durch Beschichten der Oberfläche der mineralischen Substrate mit wäßrigen Polyacrylatdispersionen und Trocknen der Beschichtung, gegebenenfalls bei erhöhter Temperatur, dadurch gekennzeichnet, daß man für die Beschichtung ein Gemisch aus

A) einer 20 bis 65 gew.-%igen, eine Mindestfilmbildetemperatur von -30 bis +30°C aufweisenden wäßrigen Dispersion eines Copolymerisats aus

a) 20 bis 70 % seines Gewichtes an (Meth)acrylestern von 3 bis 20 C-Atome enthaltenden, eine tertiäre CH-Gruppe aufweisenden Alkanolen,

b) 30 bis 60 % seines Gewichtes an Styrol, $\alpha$-Methylstyrol, Methacrylsäuremethylester, (Meth)acrylsäure-tert.-butylester und/oder (Meth)acrylnitril und

c) 0,2 bis 7 % seines Gewichtes an 3 bis 5 C-Atome aufweisenden Mono- und/oder Dicarbonsäuren und/oder deren gegebenenfalls am N-Atom durch eine 1 bis 4 C-Atome enthaltende Alkylgruppe substituierten Amiden und

B) 0,1 bis 5 Gew.-%, bezogen auf die Menge des in der Komponente (A) enthaltenen Copolymerisats, eines aromatischen Ketons

verwendet und die Beschichtung bei und/oder nach ihrer Trocknung mit ultraviolettem Licht bestrahlt.

2. Verfahren nach Anspruch 1, dadurch gekennzeichnet, daß die wäßrige Dispersion (A) eine Mindestfilmbildetemperatur von -20 bis +10°C hat und ihr Copolymerisat aufgebaut ist aus

(a) 20 bis 70 % seines Gewichtes an (Meth)acrylestern von 6 bis 12 C-Atome enthaltenden, eine tertiäre CH-Gruppe aufweisenden Alkanolen,

(b) 30 bis 60 % seines Gewichtes an Styrol, $\alpha$-Methylstyrol und/oder Methacrylsäuremethylester,

(c) 1 bis 4 % seines Gewichtes an 3 bis 5 C-Atome aufweisenden Mono- und/oder Dicarbonsäuren und/oder deren gegebenenfalls am N-Atom durch eine 1 bis 4 C-Atome enthaltende Alkylgruppe substituierten Amiden, und

(d) 0 bis 6 % seines Gewichtes an Tetrahydrofurfuryl(meth)acrylaten und/oder Alkoxyalkyl(meth)acrylaten, deren Alkoxygruppen 1 bis 4 C-Atome haben und an eine mittelständige $CH_2$-Gruppe gebunden sind,

3. Verfahren nach den Ansprüchen 1 und 2, dadurch gekennzeichnet, daß das zur Beschichtung eingesetzte Gemisch als Komponente (B) 0,2 bis 2,5 Gew.-%, bezogen auf die Menge des in der Komponente (A) enthaltenen Copolymerisats, Benzophenon und/oder eines Benzophenonderivates enthält.

**Claims**

1. A process for preventing efflorescence phenomena on mineral substrates by coating the surface of the mineral substrates with an aqueous polyacrylate dispersion and drying the coating, if necessary at elevated temperatures, wherein a mixture of

A) a 20-65% strength by weight aqueous dispersion of a copolymer of

a) from 20 to 70%, based on the weight of the copolymer, of (meth)acrylates of alkanols which are of 3 to 20 carbon atoms and have a tertiary CH group,

b) from 30 to 60%, based on the weight of the copolymer, of styrene, a-methylstyrene, methyl methacrylate, tert-butyl (meth)acrylate and/or (meth)acrylonitrile and

c) from 0.2 to 7%, based on the weight of the copolymer, of mono- and/or dicarboxylic acids of 3 to 5 carbon atoms and/or their amides which may be substituted at the N atom by alkyl of 1 to 4 carbon atoms, the said dispersion having a minimum film-forming temperature of from -30 to +30°C, and

B) from 0.1 to 5% by weight, based on the amount of the copolymer present in component (A) of an aromatic ketone

is used for the coating, and the coating is exposed to ultraviolet light while it is being dried and/or after it has been dried.

2. A process as claimed in claim 1, wherein the aqueous dispersion (A) has a minimum film-forming temperature of from -20 to +10°C and its copolymer is composed of

(a) from 20 to 70%, based on the weight of the copolymer, of (meth)acrylates of alkanols which are of 6 to 12 carbon atoms and have a tertiary CH group,

(b) from 30 to 60%, based on the weight of the copolymer, of styrene, a-methylstyrene and/or methyl methacrylate,

(c) from 1 to 4%, based on the weight of the copolymer, of mono- and/or dicarboxylic acids of 3 to 5 carbon atoms and/or their amides which may be substituted at the N atom by alkyl of 1 to 4 carbon atoms, and

(d) from 0 to 6%, based on the weight of the copolymer, of tetrahydrofurfuryl (meth)acrylate and/or alkoxyalkyl (meth)acrylates whose alkoxy groups are of 1 to 4 carbon atoms and are bonded to a middle $CH_2$ group.

3. A process as claimed in claim 1 or 2, wherein the mixture used for coating contains from 0.2 to 2.5% by weight, based on the amount of the copolymer present in component (A), of benzophenone and/or a benzophenone derivative as component (B).


**Revendications**

1. Procédé pour empêcher des manifestations d'efflorescence sur des subjectiles minéraux par revêtement de la surface des subjectiles minéraux par des dispersions aqueuses de polyacrylates et séchage du revêtement, éventuellement à température élevée, caractérisé en ce que l'on utilise, pour le revêtement, un mélange constitué de

A) 20 à 65% en poids d'une dispersion aqueuse, présentant une température filmogène minimale de -30 à +30°C, d'un copolymère composé de

    a) 20 à 70% de son poids d'esters de l'acide (méth)acrylique d'alcanols qui contiennent de 3 à 20 atomes de carbone et qui présentent un radical CH tertiaire,

    b) 30 à 60% de son poids de styrène, d'alphaméthylstyrène, de méthacrylate de méthyle, de (méth)acrylate de tert-butyle et/ou de (méth)acrylonitrile et

    c) 0,2 à 7% de son poids d'acides mono- et/ou dicarboxyliques comportant de 3 à 5 atomes de carbone et/ou de leurs amides éventuellement substitués sur l'atome d'azote par un radical alkyle contenant de 1 à 4 atomes de carbone et

B) 0,1 à 5% en poids, par rapport à la proportion de copolymère contenu dans le composant (A), d'une cétone aromatique et

on irradie le revêtement par de la lumière ultraviolette lors de et/ou après son séchage.

2. Procédé suivant la revendication 1, caractérisé en ce que la dispersion aqueuse (A) possède une température filmogène minimale de -20 à +10°C et en ce que son copolymère est constitué de

    (a) 20 à 70% de son poids d'esters de l'acide (méth)acrylique comportant de 6 à 12 atomes de carbone d'alcanols présentant un radical CH tertiaire,

    (b) 30 à 60% de son poids de styrène, d'alpha-méthylstyrène et/ou de méthacrylate de méthyle,

    (c) 1 à 4% de son poids d'acides mono- et/ou dicarboxyliques comportant de 3 à 5 atomes de carbone et/ou de leurs amides éventuellement substitués sur l'atome d'azote par un radical alkyle comportant de 1 à 4 atomes de carbone et

    (d) 0 à 6% de son poids de (méth)acrylates de tétrahydrofurfuryle et/ou de (méth)acrylates d'alcoxyalkyle, dont les radicaux alcoxy comportent de 1 à 4 atomes de carbone et sont liés à un radical $CH_2$ en position médiane.

3. Procédé suivant les revendications 1 et 2, caractérisé en ce que le mélange mis en oeuvre pour le revêtement contient, à titre de composant (B), de 0,2 à 2,5% en poids, par rapport à la proportion du copolymère contenu dans le composant (A), de benzophénone et/ou d'un dérivé de la benzophénone.